# EUROPEAN PATENT APPLICATION

(11) **EP 4 847 912 A1**
(43) Date of publication of application: **02.12.2026**
(21) Application number: 26180668.1
(22) Date of filing: 22.05.2026
(51) Int. Cl.: G01N 23/2251, G01N 23/2252

(54) **CHARGED PARTICLE BEAM APPARATUS AND ANALYSIS METHOD**

(30) Priority: 29.05.2025 JP 2025090022
(71) Applicant: JEOL Ltd., Akishima, Tokyo 196-8558 (JP)
(72) Inventor: OTSUKA, Takeshi, Tokyo, 196-8558 (JP)
(74) Representative: Boult Wade Tennant LLP

(57) **Abstract**

A charged particle beam apparatus (100) includes: an optical system (10) for scanning a specimen (S) with a charged particle beam; a first detector (30) that detects charged particles generated in the specimen (S) by irradiating the specimen with the charged particle beam; a second detector (40) that detects a signal unique to an element constituting the specimen (S), the signal being generated in the specimen (S) by irradiating the specimen (S) with the charged particle beam; an image acquisition unit (802) that acquires a first image indicating a distribution of intensity of the charged particles and being obtained by scanning the specimen (S) with the charged particle beam through the optical system (10) and detecting the charged particles with the first detector (30), and acquires a second image indicating a distribution of an element and being obtained by scanning the specimen (S) with the charged particle beam through the optical system (10) and detecting the signal with the second detector (40); a correlation calculation unit (804) that divides the first image into a plurality of regions and determines a correlation between each of the regions and the second image; and an analysis unit that identifies an element for each of the regions, based on the correlation.

## Description

### BACKGROUND OF THE INVENTION

### Field of the Invention

The present invention relates to a charged particle beam apparatus and an analysis method.

### Description of Related Art

In a charged particle beam apparatus such as a scanning electron microscope, a scanning transmission electron microscope, or a scanning ion microscope, an electron beam emitted from an electron gun is narrowed by an objective lens to be incident on a specimen. At this time, electrons at a higher level than inner-shell electrons transition into vacancies that are created when the electrons incident on a specimen eject the inner-shell electrons constituting atoms, so that characteristic X-rays are generated. Since the energy of the characteristic X-rays varies from element to element, the element can be identified from the energy of the X-rays.

Using this feature, the charged particle beam apparatus can obtain a two-dimensional element map by detecting characteristic X-rays while scanning a specimen with an electron beam. For example, JP 2023-15633 A discloses a scanning electron microscope including a secondary electron detector, a backscattered electron detector, and an X-ray detector, in which a secondary electron image, a backscattered electron image, and an element map can be obtained at the same time.

The amount of characteristic X-rays generated by electrons incident on a specimen is smaller than the amount of electron beams incident on the specimen. For this reason, in order to obtain an element map with high position resolution in elementary analysis using characteristic X-rays, it has been necessary to irradiate a specimen with large-current electron beams or to accumulate measurement results by conducting multiple measurements of the same measurement points. Therefore, the specimen may be damaged by electron beams or the measurement may take a long time.

### SUMMARY OF THE INVENTION

A charged particle beam apparatus according to a first aspect of the present disclosure includes:
an optical system for scanning a specimen with a charged particle beam;
a first detector that detects charged particles generated in the specimen by irradiating the specimen with the charged particle beam;
a second detector that detects a signal unique to an element constituting the specimen, the signal being generated in the specimen by irradiating the specimen with the charged particle beam;
an image acquisition unit that acquires a first image indicating a distribution of intensity of the charged particles and being obtained by scanning the specimen with the charged particle beam through the optical system and detecting the charged particles with the first detector, and acquires a second image indicating a distribution of an element and being obtained by scanning the specimen with the charged particle beam through the optical system and detecting the signal with the second detector;
a correlation calculation unit that divides the first image into a plurality of regions and determines a correlation between each of the regions and the second image; and
an analysis unit that identifies an element for each of the regions, based on the correlation.

An analysis method according to a second aspect of the present disclosure in a charged particle beam apparatus that includes:
an optical system for scanning a specimen with a charged particle beam;
a first detector that detects charged particles generated in the specimen by irradiating the specimen with the charged particle beam; and
a second detector that detects a signal unique to an element constituting the specimen, the signal being generated in the specimen by irradiating the specimen with the charged particle beam;
the analysis method comprising:
   acquiring a first image indicating a distribution of intensity of the charged particles and being obtained by scanning the specimen with the charged particle beam through the optical system and detecting the charged particles with the first detector, and acquiring a second image indicating a distribution of an element and being obtained by scanning the specimen with the charged particle beam through the optical system and detecting the signal with the second detector;
   dividing the first image into a plurality of regions and determining a correlation between each of the regions and the second image; and
   identifying an element for each of the regions, based on the correlation.

### BRIEF DESCRIPTION OF THE DRAWINGS

FIG. 1 illustrates the configuration of an electron microscope according to one embodiment of the present invention.
FIG. 2 illustrates an example of the configuration of an information processing device.
FIG. 3 is a flowchart illustrating an example of an analysis method in the electron microscope according to the embodiment of the present invention.
FIG. 4 illustrates a backscattered electron image of a specimen made of gold, platinum, resin, and brass.
FIG. 5 illustrates an element map of copper.
FIG. 6 illustrates an element map of zinc.
FIG. 7 illustrates an element map of platinum.
FIG. 8 illustrates an element map of gold.
FIG. 9 illustrates a histogram of backscattered electron intensity in a backscattered electron image.
FIG. 10 illustrates a partial image generated by extracting pixels constituting the peak at the -17000 position of the histogram.
FIG. 11 illustrates a partial image generated by extracting pixels constituting the peak at the -70 position of the histogram.
FIG. 12 illustrates a partial image generated by extracting pixels constituting the peak at the 14400 position of the histogram.
FIG. 13 illustrates one partial image generated by dividing the partial image into two by image processing.
FIG. 14 illustrates the other partial image generated by dividing the partial image into two by image processing.
FIG. 15 illustrates a table showing correlation coefficients between partial images and element maps.
FIG. 16 illustrates an image of an element distribution obtained by coloring the backscattered electron image.
FIG. 17 is a flowchart illustrating an example of the processing of a processing unit.
FIG. 18 schematically illustrates a backscattered electron image of a crystalline specimen.
FIG. 19 illustrates the element map of an element A.
FIG. 20 illustrates the element map of an element B.
FIG. 21 illustrates the result of edge extraction of the backscattered electron image by image processing.
FIG. 22 schematically illustrates a plurality of partial images obtained by dividing the backscattered electron image into a plurality of regions by edge extraction processing and labeling processing.
FIG. 23 schematically illustrates partial images highly correlated with the element map of the element A.
FIG. 24 schematically illustrates partial images highly correlated with the element map of the element B.
FIG. 25 schematically illustrates an image of an element distribution obtained by coloring the backscattered electron image.
FIG. 26 schematically illustrates another example of the image of the element distribution obtained by coloring the backscattered electron image.

### DESCRIPTION OF THE INVENTION

A charged particle beam apparatus according to one embodiment of the present disclosure includes:
an optical system for scanning a specimen with a charged particle beam;
a first detector that detects charged particles generated in the specimen by irradiating the specimen with the charged particle beam;
a second detector that detects a signal unique to an element constituting the specimen, the signal being generated in the specimen by irradiating the specimen with the charged particle beam;
an image acquisition unit that acquires a first image indicating a distribution of intensity of the charged particles and being obtained by scanning the specimen with the charged particle beam through the optical system and detecting the charged particles with the first detector, and acquires a second image indicating a distribution of an element and being obtained by scanning the specimen with the charged particle beam through the optical system and detecting the signal with the second detector;
a correlation calculation unit that divides the first image into a plurality of regions and determines a correlation between each of the regions and the second image; and
an analysis unit that identifies an element for each of the regions, based on the correlation.

In such a charged particle beam apparatus, the first image is divided into a plurality of regions, and an element is identified by determining the correlation between each region of the first image and the second image. Thus, an image of the element distribution can be obtained with high position resolution in a short time.

An analysis method according to one embodiment of the present disclosure in a charged particle beam apparatus that includes:
an optical system for scanning a specimen with a charged particle beam;
a first detector that detects charged particles generated in the specimen by irradiating the specimen with the charged particle beam; and
a second detector that detects a signal unique to an element constituting the specimen, the signal being generated in the specimen by irradiating the specimen with the charged particle beam;
the analysis method comprising:
   acquiring a first image indicating a distribution of intensity of the charged particles and being obtained by scanning the specimen with the charged particle beam through the optical system and detecting the charged particles with the first detector, and acquiring a second image indicating a distribution of an element and being obtained by scanning the specimen with the charged particle beam through the optical system and detecting the signal with the second detector;
   dividing the first image into a plurality of regions and determining a correlation between each of the regions and the second image; and
   identifying an element for each of the regions, based on the correlation.

In such an analysis method, the first image is divided into a plurality of regions, and an element is identified by determining the correlation between each region of the first image and the second image. Thus, an image of the element distribution can be obtained with high position resolution in a short time.

Preferred embodiments of the present invention will be described in detail below with reference to the drawings. It is noted that the embodiments described below do not unduly limit the contents of the present invention described in the claims. Further, not all of the components described below are necessarily essential requirements of the present invention.

Hereinafter, a scanning electron microscope for detecting electrons generated in a specimen by irradiation with an electron beam and acquiring a scan image will be described as an example of the charged particle beam apparatus according to the present invention. The charged particle beam apparatus according to the present invention may be an apparatus that detects charged particles generated in a specimen by irradiation with a charged particle beam (an ion beam or the like) other than electron beams and acquires a scan image.

### 1. Electron Microscope

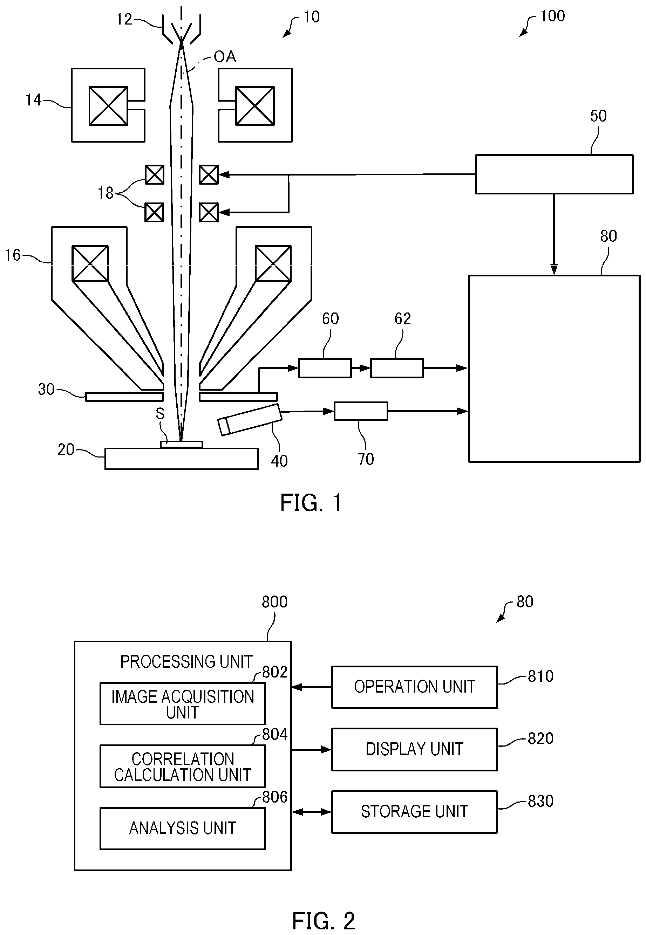

First, an electron microscope according to one embodiment of the present invention will be described with reference to the drawings. FIG. 1 illustrates an example of the configuration of an electron microscope 100 according to one embodiment of the present invention.

The electron microscope 100 scans a specimen S with an electron beam, detects electrons generated in the specimen S, and acquires a scan image. The scan image is an image obtained by scanning the specimen S with a probe formed by an electron beam or the like and detecting a signal (electrons, X-rays, or the like) generated from the specimen S.

As illustrated in FIG. 1, the electron microscope 100 includes an optical system 10, a specimen stage 20, a backscattered electron detector 30 (an example of a first detector), an X-ray detector 40 (an example of a second detector), a scan signal generator 50, a signal adjuster 60, a signal acquirer 62, an X-ray signal analyzer 70, and an information processing device 80.

The optical system 10 scans the specimen S with an electron beam. The optical system 10 includes an electron source 12, a converging lens 14, an objective lens 16, and a scanning deflector 18.

The electron source 12 emits an electron beam. The electron source 12 is, for example, an electron gun that accelerates electrons emitted from the cathode at the anode and emits an electron beam.

The converging lens 14 converges the electron beam emitted from the electron source 12 to form an electron probe together with the objective lens 16. The convergence angle of the electron beam can be adjusted by the converging lens 14.

The objective lens 16 is a lens for forming an electron probe disposed immediately before the specimen S. The objective lens 16 includes, for example, a coil and a yoke. In the objective lens 16, lines of magnetic force generated by the coil are confined in the yoke made of a material with high magnetic permeability, and notches are formed in a part of the yoke, so that the lines of magnetic force distributed with high density are leaked onto an optical axis OA.

The scanning deflector 18 two-dimensionally deflects the electron beam. The scanning deflector 18 is used to scan the specimen S with an electron probe. The scanning deflector 18 is driven in response to a scan signal output from the scan signal generator 50 and deflects the electron beam. As a result, the specimen S can be scanned with the electron probe.

The specimen S is placed on the specimen stage 20. The specimen stage 20 supports the specimen S. The specimen stage 20 has a drive mechanism for moving the specimen S.

The backscattered electron detector 30 detects backscattered electrons generated in the specimen S by irradiating the specimen S with the electron beam. The backscattered electron detector 30 is disposed immediately below the objective lens 16. The backscattered electron detector 30 has an annular shape. The electron beam to be emitted to the specimen S passes through the central hole of the backscattered electron detector 30 and is emitted to the specimen S. The backscattered electron detector 30 is, for example, a silicon semiconductor detector. The backscattered electron detector 30 outputs an electron detection signal.

Backscattered electrons are electrons having popped out in a process in which electrons incident on the specimen S are scattered by elements constituting the specimen S. The intensity (signal quantity) of backscattered electrons emitted from the specimen S depends on the scattering probability of electrons and elements. Since the scattering cross-sectional area that determines the scattering probability increases with the atomic number, elements with higher atomic numbers have a greater proportion of emitted backscattered electrons. That is, the larger the atomic numbers of the elements constituting the specimen S, the greater the backscattered electron intensity. Therefore, elements constituting the specimen S can be determined from the backscattered electron intensity.

The signal adjuster 60 adjusts, for example, a signal amplification and a signal offset for the electron detection signal (analog signal) output from the backscattered electron detector 30, the adjustment being made without saturating the electron detection signal and in the input range of the signal acquirer 62.

The signal acquirer 62 converts the electron detection signal into a digital signal to acquire the digital signal. The signal acquirer 62 acquires the digital signal with a high signal resolution in order to accurately identify an element from the backscattered electron intensity. In this case, in order to display an image as a general gray-scale image, a digital signal of about 8 bits is required. The signal acquirer 62 acquires the digital signal with a signal resolution of 8 bits or more. For example, in the case of a digital signal of 12 bits or more, even elements with similar atomic numbers are distinguishable by the backscattered electron intensity. The digital signal acquired by the signal acquirer 62 is transmitted to the information processing device 80.

The X-ray detector 40 detects characteristic X-rays generated in the specimen S by irradiating the specimen S with an electron beam. The characteristic X-ray is a signal unique to an element constituting the specimen S. The characteristic X-ray is an X-ray emitted when outer-shell electrons transition into vacancies generated by the ejection of inner-shell electrons by electrons. The characteristic X-ray has energy unique to an element. The X-ray detector 40 is, for example, an EDS detector used in energy dispersive X-ray spectroscopy (EDS). The X-ray detector 40 is, for example, a semiconductor detector such as a Si (Li) detector or a silicon drift detector. The X-ray detector 40 outputs an X-ray detection signal corresponding to the energy of X-rays.

The X-ray signal analyzer 70 counts the X-ray detection signals output from the X-ray detector 40, by the energy of X-rays to acquire energy spectrum data. The energy spectrum data acquired by the X-ray signal analyzer 70 is sent to the information processing device 80.

The scan signal generator 50 generates a scan signal for controlling the amount of deflection of the electron beam in the scanning deflector 18. The scan signal generator 50 generates a coordinate signal synchronized with the scan signal. The coordinate signal is a signal including position information of the electron probe. The coordinate signal is sent to the information processing device 80.

The information processing device 80 performs processing such as processing for acquiring a backscattered electron image, processing for acquiring an element map, and processing for generating an image of an element distribution from the backscattered electron image and the element map.

In the electron microscope 100, an electron beam emitted from the electron source 12 is narrowed by the converging lens 14 and the objective lens 16 to form the electron probe, and the electron beam is deflected by the scanning deflector 18 according to the scan signal, allowing scanning of the specimen S with the electron probe. Secondary electrons, backscattered electrons, Auger electrons, and characteristic X-rays or the like are generated from the specimen S by irradiating the specimen S with the electron beam. While the specimen S is scanned with the electron probe, backscattered electrons are detected by the backscattered electron detector 30, thereby obtaining a backscattered electron image. Also, while the specimen S is scanned with the electron probe, characteristic X-rays are detected by the X-ray detector 40, thereby obtaining an element map. The electron microscope 100 can obtain both a backscattered electron image and an EDS element map in one scanning operation.

FIG. 2 illustrates an example of the configuration of the information processing device 80. As illustrated in FIG. 2, the information processing device 80 includes a processing unit 800, an operation unit 810, a display unit 820, and a storage unit 830.

The operation unit 810 is used for a user to input operation information and outputs input operation information to the processing unit 800. The function of the operation unit 810 can be implemented by an input device such as a keyboard, a mouse, a button, a touch panel, a touch pad, or the like.

The display unit 820 displays an image generated by the processing unit 800. The function of the display unit 820 can be implemented by a liquid crystal display (LCD), a touch panel display, or the like.

The storage unit 830 stores programs and data or the like for the processing unit 800 to perform various kinds of calculation processing and control processing. Moreover, the storage unit 830 is also used as a work area for the processing unit 800, and is also used to temporarily store calculation results and the like executed by the processing unit 800 in accordance with various programs. The functions of the storage unit 830 can be implemented by a random access memory (RAM), a read only memory (ROM), a hard disk, and the like.

The function of the processing unit 800 can be implemented by executing the programs stored in the storage unit 830, the programs being executed by various kinds of processors such as a central processing unit (CPU), a graphics processing unit (GPU), or a digital signal processor (DSP). The processing unit 800 includes an image acquisition unit 802, a correlation calculation unit 804, and an analysis unit 806.

The image acquisition unit 802 acquires a backscattered electron image (an example of a first image). The backscattered electron image shows the distribution of backscattered electron intensity and is obtained by scanning the specimen S with the electron beam and detecting backscattered electrons generated in the specimen S. The image acquisition unit 802 identifies the coordinates of the irradiation position of the electron beam from a coordinate signal output from the scan signal generator 50, and acquires information on the backscattered electron intensity (signal quantity) from the digital signal acquired by the signal acquirer 62. The image acquisition unit 802 acquires the digital signal in synchronization with the coordinate signal, thereby associating the coordinates of the irradiation position of the electron beam with the backscattered electron intensity. In this manner, the image acquisition unit 802 can acquire a backscattered electron image.

The image acquisition unit 802 acquires an element map (an example of a second image) by EDS. The element map obtained by EDS is an image showing the element distribution obtained by scanning the specimen S with an electron beam and detecting characteristic X-rays generated in the specimen S. For example, the element map obtained by EDS is generated for each element.

The image acquisition unit 802 identifies the coordinates of the irradiation position of the electron beam from the coordinate signal and acquires, from energy spectrum data, information on the intensity (signal quantity) of the characteristic X-rays of the element to be analyzed. The image acquisition unit 802 acquires the energy spectrum data in synchronization with the coordinate signal, thereby associating the coordinates of the irradiation position of the electron beam with the intensity of the characteristic X-ray of the element to be analyzed. In this manner, the image acquisition unit 802 can obtain the element map by EDS.

The correlation calculation unit 804 divides the backscattered electron image into a plurality of regions and determines the correlation between each of the regions and the element map. The correlation calculation unit 804 divides the backscattered electron image into a plurality of regions by image processing. The correlation calculation unit 804 divides the backscattered electron image into a plurality of regions based on, for example, the backscattered electron intensity. For example, the correlation calculation unit 804 divides the backscattered electron image into a plurality of regions by generating a histogram of the backscattered electron intensity from the backscattered electron image and generating an image at each peak of the histogram. The correlation calculation unit 804 may divide the backscattered electron image into a plurality of regions by performing image processing such as edge extraction, labeling, and Hough transform to detect shape features of the image. The correlation calculation unit 804 may divide the backscattered electron image into a plurality of regions with a combination of image processing for dividing the backscattered electron image into a plurality of regions based on the backscattered electron intensity by using the histogram or the like and image processing for detecting shape features of the backscattered electron image.

The correlation calculation unit 804 determines the correlation between each of the regions and the element map. The method for determining the correlation will be described later.

The analysis unit 806 identifies an element included in the region, based on the correlation determined for each of the regions by the correlation calculation unit 804. The analysis unit 806 colors the regions of the backscattered electron image, for example, based on the information on the elements identified for the respective regions. The analysis unit 806 may display element names in the regions on the backscattered electron image, based on the information on the elements identified for the respective regions.

### 2. Analysis Method

### 2.1. Analysis on Specimen with Known Constituent Elements

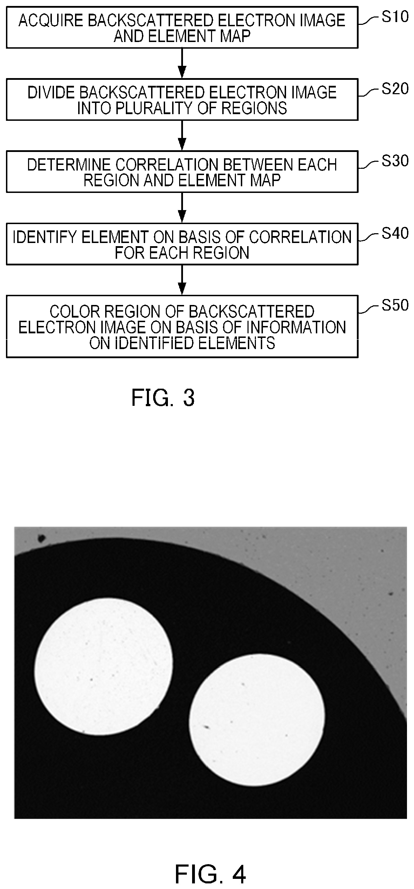

A method for analyzing the specimen in the electron microscope 100 will be described below. Hereinafter, the constituent elements of the specimen S to be analyzed are known. FIG. 3 is a flowchart illustrating an example of the analysis method in the electron microscope 100.

First, a backscattered electron image and an element map are obtained (S10).

In the electron microscope 100, the backscattered electron image is obtained by the backscattered electron detector 30 detecting backscattered electrons generated in the specimen S while the specimen S is scanned with an electron beam, and the element map is obtained by the X-ray detector 40 detecting characteristic X-rays generated in the specimen S.

FIG. 4 illustrates a backscattered electron image of a specimen made of gold, platinum, resin, and brass. The backscattered electron image illustrated in FIG. 4 includes a specimen region composed of gold, a specimen region composed of platinum, a specimen region composed of resin, and a specimen region composed of brass. In each pixel of the backscattered electron image, information on the backscattered electron intensity is stored. Since the signal acquirer 62 of the electron microscope 100 has a high signal resolution, data with a high signal resolution can be stored in each pixel. For example, in each pixel of the backscattered electron image acquired by the electron microscope 100, information on the backscattered electron intensity is stored as 16-bit data.

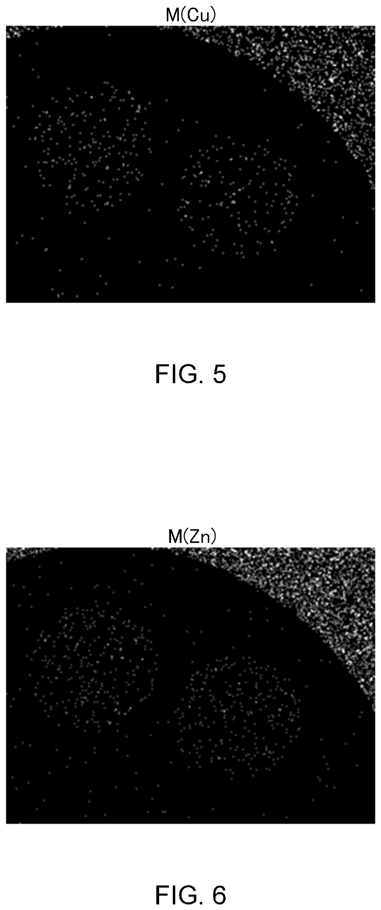

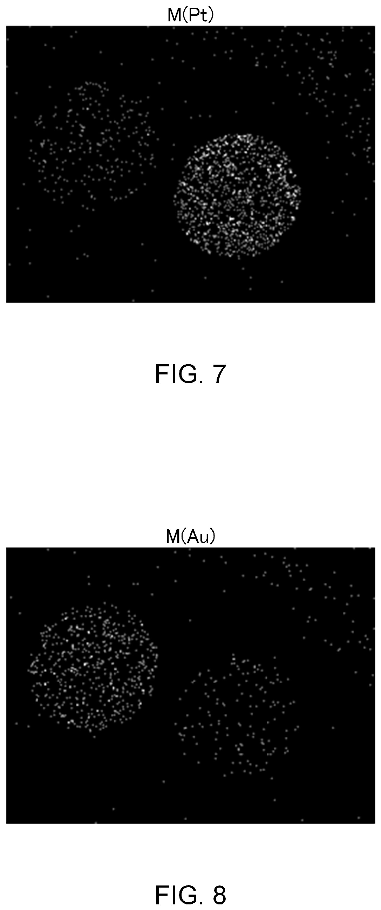

FIG. 5 illustrates an element map M(Cu) of copper. FIG. 6 illustrates an element map M(Zn) of zinc. FIG. 7 illustrates an element map M(Pt) of platinum. FIG. 8 illustrates an element map M(Au) of gold. The element maps illustrated in FIGS. 5 to 8 are element maps obtained by EDS. Here, the backscattered electron image and the element map are acquired in the same region of the specimen S, and the backscattered electron image and the element map are acquired by simultaneously detecting backscattered electrons and characteristic X-rays.

Alternatively, backscattered electrons and characteristic X-rays may be detected separately. That is, after a backscattered electron image is acquired by scanning the specimen S, the element map may be acquired by scanning the same region of the specimen S with an electron beam again.

The backscattered electron image is then divided into a plurality of regions (S20).

The backscattered electron image is divided into a plurality of regions by image processing. For example, the backscattered electron image is divided into a plurality of regions by using the histogram of backscattered electron intensity in the backscattered electron image.

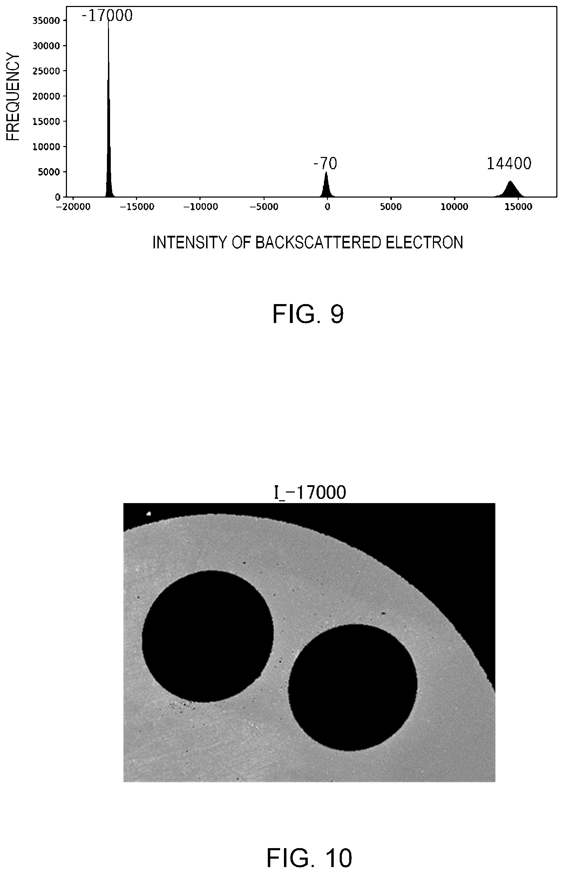

FIG. 9 illustrates the histogram of backscattered electron intensity in the backscattered electron image illustrated in FIG. 4. The histogram of backscattered electron intensity is a histogram showing the frequency of backscattered electron intensity stored in each pixel of the backscattered electron image. In the histogram illustrated in FIG. 9, the horizontal axis represents backscattered electron intensity, and the vertical axis represents the frequency of occurrence of the intensity.

Thereafter, an image (partial image) is generated at each peak of the histogram. In the histogram illustrated in FIG. 9, peaks can be confirmed at the position of -17000, the position of -70, and the position of 14400. The position of -17000 corresponds to the intensity of backscattered electrons generated from the region of the specimen made of resin. The position of -70 corresponds to the intensity of backscattered electrons generated from the region of the specimen made of brass. The position of 14400 corresponds to the intensity of backscattered electrons generated from the region of the specimen made of platinum or gold. Pixels constituting each of the three peaks are extracted to generate an image.

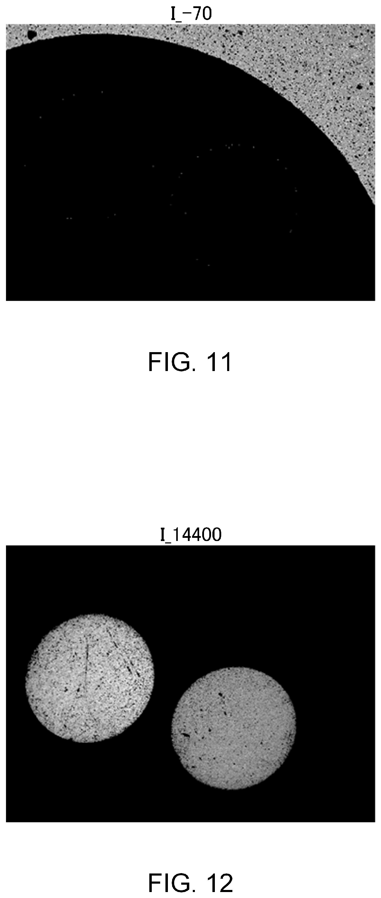

FIG. 10 illustrates a partial image I_-17000 generated by extracting pixels constituting the peak at the position of -17000 in the histogram illustrated in FIG. 9. FIG. 11 illustrates a partial image I_-70 generated by extracting pixels constituting the peak at the position of -70 in the histogram illustrated in FIG. 9. FIG. 12 illustrates a partial image I_14400 generated by extracting pixels constituting the peak at the position of 14400 in the histogram illustrated in FIG. 9.

In the partial image I_-17000 illustrated in FIG. 10, pixels in the peak range are expressed in gray scale. In contrast, the brightness of pixels outside the peak range is assumed to be zero. The partial image I_-70 illustrated in FIG. 11 and the partial image I_14400 illustrated in FIG. 12 have been created in the same manner as the partial image I_-17000 illustrated in FIG. 10.

Since the difference between the atomic number of gold and the atomic number of platinum is small, the peak of backscattered electrons of gold and the peak of backscattered electrons of platinum cannot be separated from each other in the histogram illustrated in FIG. 9. Therefore, the partial image I_14400 is divided into two by image processing.

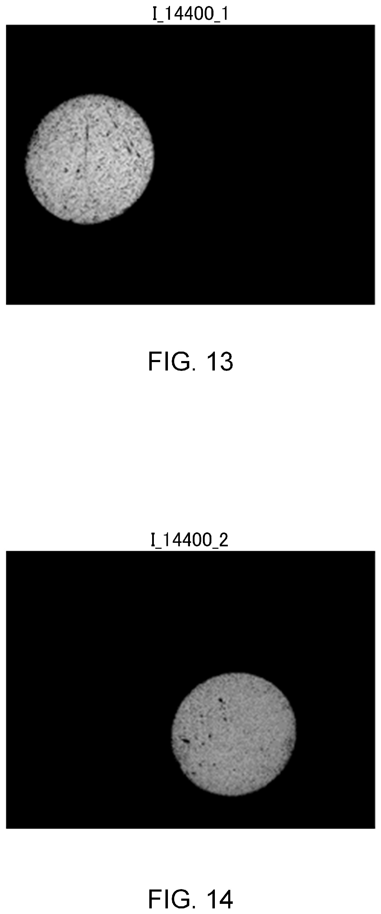

FIG. 13 illustrates one partial image I_14400_1 generated by dividing the partial image I_14400 into two by image processing. FIG. 14 illustrates the other partial image I_14400_2 generated by dividing the partial image I_14400 into two by image processing.

For example, the partial image I_14400 is divided into the partial image I_14400 _1 and the partial image I_14400_2 by performing labeling processing on the partial image I_14400. The labeling processing is a technique in which an identical label is attached when a pixel of "1" is adjacent to a pixel of "1" in a binarized image.

In this case, although the backscattered electron image (partial image) is divided into a plurality of regions by the labeling processing, the method for separating the regions is not limited thereto. Alternatively, the backscattered electron image may be divided into a plurality of regions by extracting shape features from the backscattered electron image by other known image processing.

In addition, in step S20 for dividing the backscattered electron image, the region of the same element may be divided into separate regions as separate partial images.

Next, the correlation between each region and the element map is obtained (S30).

In this case, the correlation between the partial image and the element map is determined by calculating the correlation coefficient between the partial image and the element map. A correlation coefficient r is used as an index indicating the relationship between two kinds of data, and is determined by the following equation: $r = \frac{\frac{1}{n} {\sum }_{i = 1}^{n} \left({x}_{i}-\overline{x}\right) \left({y}_{i}-\overline{y}\right)}{\sqrt{\frac{1}{n} {\sum }_{i = 1}^{n} {\left({x}_{i}-\overline{x}\right)}^{2}} \sqrt{\frac{1}{n} {\sum }_{i = 1}^{n} {\left({y}_{i}-\overline{y}\right)}^{2}}}$ (Math. 1) where n is the number of pixels. xᵢ is backscattered electron intensity stored in each pixel of the partial image. yᵢ is X-ray intensity stored in each pixel of the element map. x with an overline is the mean value of backscattered electron intensity, and y with an overline is the mean value of X-ray intensity.

The correlation coefficient r has a value from -1 to 1. In the case of r > 0, a positive correlation is found between two data items. When one of the data items increases, the other also tends to increase. In the case of r < 0, a negative correlation is found between two data items. When one of the data items increases, the other tends to decrease.

The above equation is applied to the partial image and the element map, and data stored in the corresponding pixels are compared to calculate the correlation coefficient. When the partial image and the element map overlap each other, the correlation coefficient is r > 0, so that the partial image and the element map have a positive correlation. When the partial image and the element map do not overlap each other, the correlation coefficient is r < 0, so that the partial image and the element map have a negative correlation. Incidentally, if the number of pixels in the partial image is different from the number of pixels in the element map, the number of pixels is adjusted in advance. The method for determining the correlation between the partial image and the element map is not limited to the above expression. The correlation between images may be determined using other known methods.

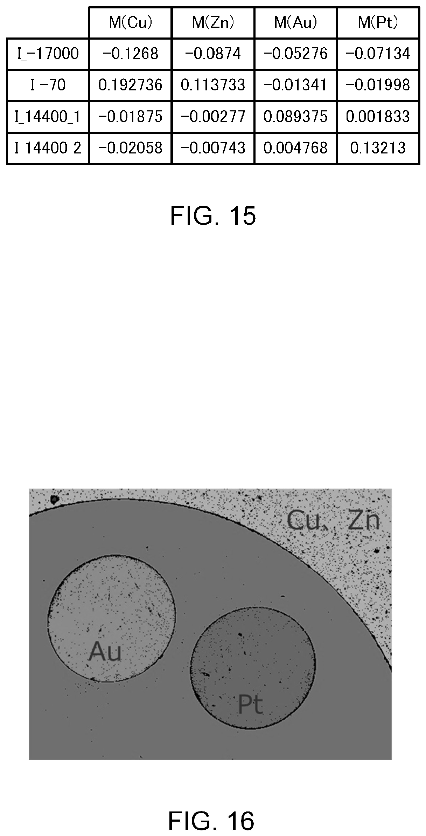

FIG. 15 is a table showing the calculation results of correlation coefficients between the partial images and the element maps. As illustrated in FIG. 15, the correlation coefficients are calculated for all of the combinations of the four partial images and the four element maps.

Next, the elements are identified based on the correlation in each region (S40).

The element map M(Cu) of copper has the maximum correlation coefficient with the partial image I_-70. The correlation coefficient between the partial image I_-70 and the element map M(Cu) of copper has a positive value, representing a positive correlation. Likewise, the element map M(Zn) of zinc has the maximum correlation coefficient with the partial image I_-70. The correlation coefficient between the partial image I_-70 and the element map M(Zn) of zinc has a positive value, representing a positive correlation. Therefore, it can be determined that the partial image I_-70 is a region containing copper and zinc.

In addition, the element map M(Au) of gold has the maximum correlation coefficient of a positive value with the partial image I_14400_1. Therefore, it can be determined that the partial image I_14400_1 is a region containing gold. Furthermore, the element map M(Pt) of platinum has the maximum correlation coefficient of a positive value with the partial image I_14400_2. Therefore, it can be determined that the partial image I_14400_2 is a region containing platinum.

The partial image I_-17000 has a correlation coefficient of a negative value with any one of the element maps, representing a negative correlation with any one of the element maps. Therefore, it can be determined that the partial image I_-17000 is a region not containing any one of copper, zinc, gold, and platinum.

The region of the backscattered electron image is colored based on information on the identified elements (S50).

FIG. 16 illustrates an image of an element distribution obtained by coloring the backscattered electron image. In FIG. 16, the image is expressed in gray scale for convenience.

The backscattered electron image is colored for each partial image. More specifically, the partial image is colored in accordance with the correlation. For example, the partial image I_-17000 is colored in green, the partial image I_14400_1 is colored in red, the partial image I_14400_2 is colored in blue, and the partial image I_-70 is colored in yellow. Thereafter, the partial image I_-17000 colored in green, the partial image I_14400_1 colored in red, the partial image I_14400_2 colored in blue, and the partial image I_-70 colored in yellow are combined to form a single image. Thus, as illustrated in FIG. 16, the backscattered electron image can be colored in accordance with the constituent elements, and an image indicating the distribution of the elements can be obtained. The image illustrated in FIG. 16 also includes information obtained from the backscattered electron image, for example, edges and unevenness on the surface of the specimen. In addition, as illustrated in FIG. 16, information on elements included in each region may be displayed on the image.

Through the above steps, an image indicating the element distribution of the specimen S can be generated.

### 2.2. Analysis on Specimen with Unknown Constituent Elements

For the specimen S with unknown constituent elements, for example, qualitative analysis is performed from the X-ray spectrum of the specimen S, the elements are identified, and the element map of the identified elements is obtained. Elements constituting the specimen S can be identified from the position of each peak of the X-ray spectrum. The subsequent steps are the same as those of the specimen with known constituent elements, and thus the description thereof is omitted. Although the constituent elements are identified from the X-ray spectrum, the means for performing qualitative analysis is not particularly limited.

### 3. Processing

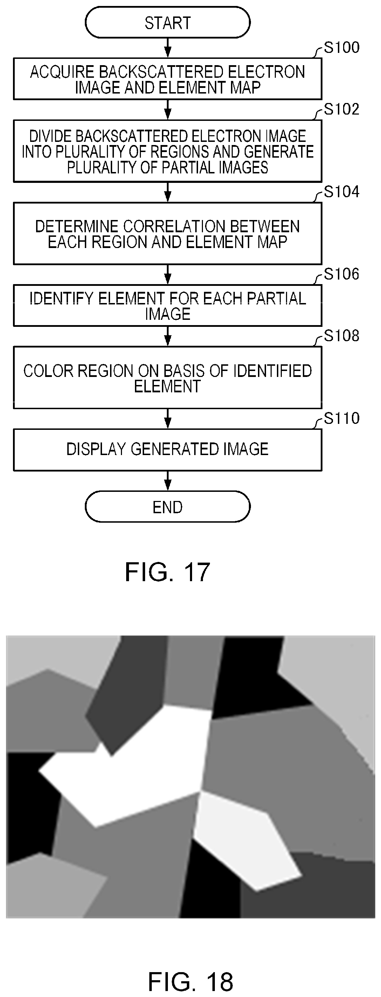

Processing for the processing unit 800 of the electron microscope 100 will be described below. FIG. 17 is a flowchart illustrating an example of the processing of the processing unit 800.

First, the image acquisition unit 802 acquires a backscattered electron image and a plurality of element maps (S100). The image acquisition unit 802 controls the optical system 10 to acquire the backscattered electron image and the element maps of multiple kinds of elements specified by the user.

In this case, the image acquisition unit 802 controls the optical system 10 to automatically acquire the backscattered electron image and the plurality of element maps. The image acquisition unit 802 may acquire the backscattered electron image and the plurality of element maps by receiving data on the previously acquired backscattered electron image and data on the plurality of element maps.

Next, the correlation calculation unit 804 divides the backscattered electron image into a plurality of regions and generates a plurality of partial images (S 102). The correlation calculation unit 804 divides the backscattered electron image into a plurality of regions based on the intensity of the backscattered electron image. Specifically, as illustrated in FIG. 9, the correlation calculation unit 804 generates the histogram of backscattered electron intensity from the backscattered electron image, and generates a plurality of partial images by generating an image at each peak of the histogram.

Next, the correlation calculation unit 804 performs image processing such as labeling processing on the generated partial image to further divide the partial image. Image processing performed on the partial image is not limited to labeling processing and includes image processing for detecting shape features of the backscattered electron image, for example, edge extraction processing and Hough transformation or other known image processing.

The backscattered electron image is divided into a plurality of regions by image processing using the histogram of backscattered electron intensity and image processing such as labeling processing that detects shape features of the backscattered electron image. Alternatively, the backscattered electron image may be divided into a plurality of regions only by processing using the histogram of backscattered electron intensity, or the backscattered electron image may be divided into a plurality of regions only by image processing that detects shape features of the backscattered electron image.

Next, the correlation calculation unit 804 determines the correlation between each region and the element map (S104). As illustrated in FIG. 15, the correlation calculation unit 804 calculates the correlation coefficients between each partial image and all the element maps.

Next, the analysis unit 806 identifies an element for each partial image based on the correlation between the partial image and the element map (S106). The analysis unit 806 selects, in each partial image, an element map having the maximum correlation coefficient of a positive value, and determines that the element of the selected element map is included in a region indicated in the partial image.

The analysis unit 806 then colors the region of the backscattered electron image based on information on the element identified for each partial image (S108). The analysis unit 806 colors the partial images while changing the colors according to the elements, and combines the colored partial images to generate a single image. Thus, the regions on the backscattered electron image can be colored according to the elements. As a result, as illustrated in FIG. 16, the element distribution can be shown on the backscattered electron image.

The analysis unit 806 displays an image of the generated element distribution on the display unit 820 (S110). After displaying the image of the element distribution on the display unit 820, the analysis unit 806 terminates the processing.

### 4. Effects

The electron microscope 100 includes the optical system 10 for scanning the specimen S with an electron beam, the backscattered electron detector 30 for detecting backscattered electrons generated in the specimen S by irradiating the specimen S with the electron beam, and the X-ray detector 40 for detecting characteristic X-rays that are signals unique to elements constituting the specimen S and are generated in the specimen S by irradiating the specimen S with the electron beam. The electron microscope 100 further includes the image acquisition unit 802 that acquires a backscattered electron image indicating the distribution of backscattered electron intensity and being obtained by scanning the specimen S with an electron beam through the optical system 10 and detecting generated backscattered electrons with the backscattered electron detector 30, and an element map indicating the distribution of elements and being obtained by scanning the specimen S with the electron beam through the optical system 10 and detecting characteristic X-rays with the X-ray detector 40, a correlation calculation unit 804 that divides the backscattered electron image into a plurality of regions and determines the correlation between each of the regions and the element map, and the analysis unit 806 that identifies the elements for each of the regions, based on the correlation.

Therefore, the electron microscope 100 can generate an image indicating the distribution of elements with high position resolution in a short time. For example, a backscattered electron image has a high position resolution even in a short-time measurement. In some cases, a difference in backscattered electron intensity is small between elements having close atomic numbers, leading to difficulty in distinguishing the elements. In an element map obtained by EDS, elements can be identified with high accuracy. However, in order to improve the position resolution, it is necessary to irradiate the specimen with a large-current electron beam or extend the measurement time.

In contrast, in the electron microscope 100, the backscattered electron image is divided into a plurality of regions, and the correlation between each region and the element map is determined to identify the elements. Thus, regions are specified in the backscattered electron image, and the elements included in the region can be identified from the element map obtained by EDS. Therefore, in the electron microscope 100, an image indicating the distribution of elements with high position resolution can be acquired in a short time. Furthermore, since the elements included in the region can be identified based on the element map obtained by EDS, the elements can be accurately identified.

In the electron microscope 100, the correlation calculation unit 804 divides the backscattered electron image into a plurality of regions to generate a plurality of partial images, and determines the correlation between each of the generated partial images and the element map. Furthermore, the analysis unit 806 identifies an element for each partial image based on the correlation between each partial image and the element map. Therefore, in the electron microscope 100, the elements can be identified for each region specified in the backscattered electron image. Thus, an image indicating the element distribution can be obtained with high position resolution in a short time.

In the electron microscope 100, the correlation calculation unit 804 divides the backscattered electron image into a plurality of regions by extraction through image processing. Thus, in the electron microscope 100, the elements can be identified for each region of the backscattered electron image, the region being extracted by image processing, and thus an image having high position resolution can be generated.

In the electron microscope 100, the correlation calculation unit 804 generates a plurality of partial images by generating a histogram of backscattered electron intensity from the backscattered electron image and generating an image at each peak of the histogram. Since the intensity of backscattered electrons increases with the atomic number of an element, the electron microscope 100 can divide the backscattered electron image into a plurality of regions depending on the kinds of included elements.

In the electron microscope 100, the correlation calculation unit 804 divides the backscattered electron image into a plurality of regions by extracting shape features from the backscattered electron image. Therefore, even if two regions cannot be separated by the histogram of backscattered electron intensity, the electron microscope 100 can properly divide the backscattered electron image into a plurality of regions.

In the electron microscope 100, the analysis unit 806 colors each region of the backscattered electron image based on information on an element identified for each region. Therefore, in the electron microscope 100, an image can be generated so as to easily recognize the distribution of elements.

The analysis method in the electron microscope 100 includes: the step of acquiring a backscattered electron image and an element map; the step of dividing the backscattered electron image into a plurality of regions and determining the correlation between each region and the element map; and the step of identifying elements included in the regions, based on the determined correlation. Therefore, in the analysis method in the electron microscope 100, an image indicating the distribution of the elements with high position resolution can be generated in a short time.

### 5. Modification Example

### 5.1. First Modification Example

### 5.1.1. Analysis Method

In the foregoing embodiments, the backscattered electron image is divided into a plurality of regions by image processing using the histogram of backscattered electron intensity and image processing such as labeling processing that detects features of the backscattered electron image. Alternatively, the backscattered electron image may be divided into a plurality of regions only by image processing using the histogram, or the backscattered electron image may be divided into a plurality of regions only by image processing that detects shape features from the backscattered electron image. Image processing that detects shape features from the backscattered electron image includes processing that detects patterns and structures in the image, for example, edges, circles and straight lines in the image, and island-like regions.

If the specimen S has crystallinity, the backscattered electron intensity may change depending on a difference in crystal orientation. That is, even with the same composition, the backscattered electron intensity may vary depending on a difference in crystal orientation and a contrast (channeling contrast) may be obtained in the backscattered electron image. As described above, in the specimen S with a channeling contrast, even when the backscattered electron image is divided into a plurality of regions by image processing using the histogram of backscattered electron intensity, the regions may not correspond to the element map. An analysis method for such a specimen will be described below.

Hereinafter, a description will be given with reference to the flowchart illustrated in FIG. 3. A detailed description of the same steps as those in the above-described embodiments is omitted.

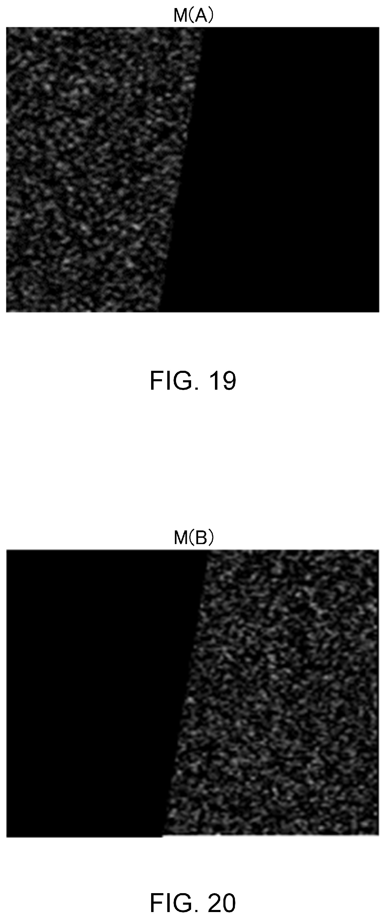

First, a backscattered electron image and an element map are obtained (S10). FIG. 18 schematically illustrates the backscattered electron image of the crystalline specimen S. FIG. 19 schematically illustrates an element map M(A) of an element A. FIG. 20 schematically illustrates an element map M(B) of an element B. The element A and the element B are optional elements different from each other.

As illustrated in FIGS. 19 and 20, the specimen S is composed of the element A and the element B. As illustrated in FIG. 18, in the backscattered electron image, even crystal grains composed of the same element vary in brightness depending on a difference in crystal orientation (channeling contrast).

The backscattered electron image is then divided into a plurality of regions (S20). In this case, image processing using the histogram of backscattered electron intensity is not performed, and only image processing that detects shape features from the backscattered electron image is performed to divide the backscattered electron image into a plurality of regions.

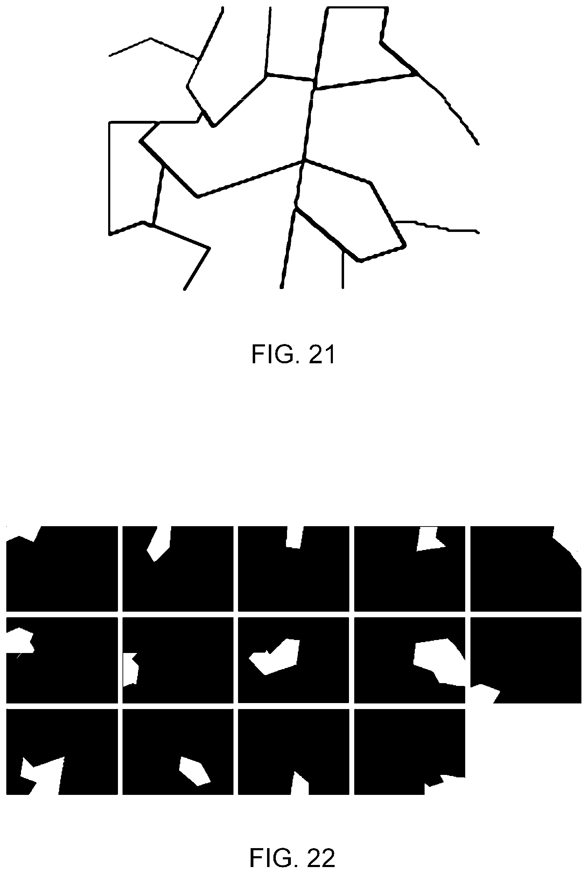

Specifically, first, edge extraction is performed on the backscattered electron image illustrated in FIG. 18. The edge extraction is, for example, processing for detecting boundaries in intensity changes in the image by image processing. FIG. 21 illustrates the result of edge extraction of the backscattered electron image by image processing.

Next, the image illustrated in FIG. 21 is binarized, and labeling processing is performed on the binarized image.

FIG. 22 illustrates a plurality of partial images obtained by dividing the backscattered electron image into a plurality of regions by edge extraction processing and labeling processing. As illustrated in FIG. 22, regions surrounded by the edges are extracted on the backscattered electron image by edge extraction processing and labeling processing, and the partial images are generated. Thus, a partial image can be generated for each crystal grain.

Thereafter, the correlation between each region and the element maps is determined (S30). Specifically, the correlation coefficient between each of the partial images illustrated in FIG. 22 and the element map M(A) of the element A is determined, and the correlation coefficient between each of the partial images illustrated in FIG. 22 and the element map M(B) of the element B is determined.

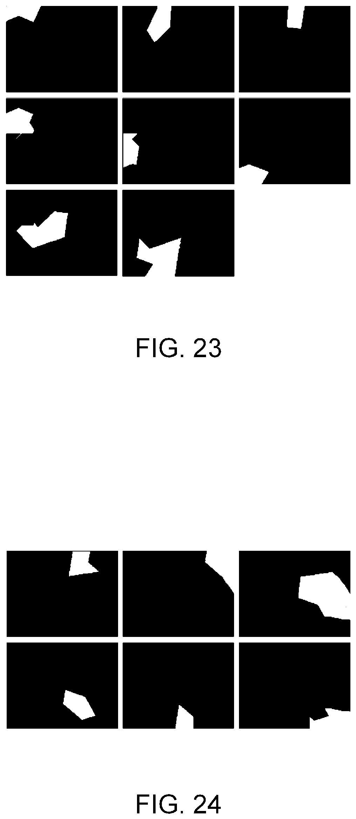

FIG. 23 schematically illustrates the partial images highly correlated with the element map of the element A. FIG. 24 schematically illustrates the partial images highly correlated with the element map of the element B.

Next, the elements are identified based on the correlation in each region (S40). The partial images illustrated in FIG. 23 can be identified as regions including the element A because the partial images are highly correlated with the element map of the element A. The partial images illustrated in FIG. 24 can be identified as regions including the element B because the partial images are highly correlated with the element map of the element B.

The region of the backscattered electron image is colored based on information on the identified elements (S50). For example, first, the plurality of partial images illustrated in FIG. 23 are colored in yellow, and the plurality of partial images illustrated in FIG. 24 are colored in blue. Thereafter, the plurality of partial images colored in yellow and the plurality of partial images colored in blue are combined to generate a single image. Thus, the backscattered electron image can be colored according to the constituent elements, and an image indicating the distribution of the elements can be generated.

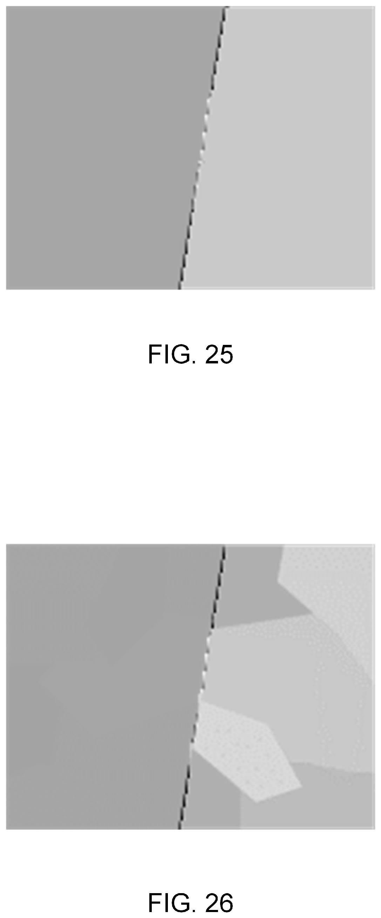

FIG. 25 schematically illustrates an image of the element distribution obtained by coloring the backscattered electron image. In FIG. 25, the image is expressed in gray scale for convenience. As illustrated in FIG. 25, as a result of analysis, the image showing the distribution of the elements with high position resolution can be obtained. In the image illustrated in FIG. 25, the distribution of the elements can be confirmed by eliminating the influence of the channeling contrast.

FIG. 26 schematically illustrates another example of the image of the element distribution obtained by coloring the backscattered electron image. In FIG. 26, the backscattered electron intensity (brightness of the backscattered electron image) of each region in the backscattered electron image illustrated in FIG. 18 has been reflected in the brightness of the partial image. As a result, in the image illustrated in FIG. 26, the distribution of the elements can be confirmed while the channeling contrast is recognized. Thus, in the image illustrated in FIG. 26, information on the composition of crystal grains and information on the crystal grain size can be obtained.

In the first modification example, the correlation calculation unit 804 divides the backscattered electron image into a plurality of regions by image processing that detects shape features from the backscattered electron image. Therefore, according to the first modification example, the backscattered electron image can be properly divided into a plurality of regions even for a specimen having a region in which the backscattered electron intensity varies depending on a difference in crystal orientation despite having the same composition. Therefore, in the first modification example, an image showing the distribution of elements with high position resolution can be generated in a short time as in the foregoing embodiments.

The backscattered electron image illustrated in FIG. 18 may be divided into a plurality of regions by performing image processing using the histogram of backscattered electron intensity, as in the foregoing embodiments.

### 5.1.2. Processing

Processing by the processing unit 800 according to the first modification example is similar to that of the foregoing embodiments except that in processing S102 for dividing the backscattered electron image into a plurality of regions to generate a plurality of partial images in FIG. 17, the backscattered electron image is divided into a plurality of regions by edge extraction processing and labeling processing. The description thereof is omitted.

### 5.2. Second Modification Example

The above-mentioned example described the analysis of the specimen having a region in which the backscattered electron intensity varies depending on a difference in crystal orientation despite having the same composition. For example, in a specimen having a region composed of compounds with different numbers of elements despite having the same composition and a specimen having a region containing substances of different phases, similarly, the backscattered electron intensity varies even if the regions are composed of the same elements. The analysis method according to the first modification example is also applicable to such specimens.

### 5.3. Third Modification Example

In the foregoing embodiments, the backscattered electron image is used as an image (first image) for specifying regions. However, the image for specifying regions may be any image obtained by detecting charged particles generated from the specimen by irradiating the specimen with a charged particle beam such as an electron beam or an ion beam.

In the foregoing embodiments, the element map obtained by EDS is used as an image for identifying the elements (second image). The image for identifying the elements may be any image obtained by detecting a signal that is unique to an element constituting the specimen and generated from the specimen by irradiating the specimen with a charged particle beam.

For example, a secondary electron image may be used as an image for specifying a region. The secondary electron image is an image obtained by detecting secondary electrons, which are excited from atoms constituting the specimen, through inelastic scattering of incident electrons (primary electrons) in the specimen.

Furthermore, for example, an element map according to wavelength-dispersive X-ray spectroscopy (WDS) or an Auger electron image may be used as an image for identifying an element.

Also, for example, when the electron microscope 100 has the function of a scanning transmission electron microscope, a dark field STEM image such as a high-angle annular dark-field scanning transmission electron microscopy (HAADF-STEM) image may be used as an image for specifying a region, and an image obtained by electron energy loss spectroscopy (image EELS) may be used as an image (second image) for identifying an element. In the HAADF-STEM image, the intensity of detected electrons is proportional to the 1.4th to 2nd power of the atomic number. Thus, the foregoing embodiments can be applied as in the case of the backscattered electron image. The image EELS is an electron-microscopic image using a spectrum in a specific energy range of an electron energy loss spectrum and provides information on the distribution of elements. The dark field STEM image and the image EELS can be simultaneously acquired similar to the backscattered electron image and the element map obtained by EDS.

Furthermore, for example, when the electron microscope 100 has the function of a scanning transmission electron microscope, a bright field STEM image may be used as an image for specifying a region, or an element map obtained by EDS may be used as an image for identifying an element.

In addition, for example, when the electron microscope 100 has the function of a focused ion beam apparatus or a scanning ion microscope, a scanning ion microscope (SIM) image may be used as an image for specifying a region. The SIM image is an image obtained by detecting secondary electrons emitted when the specimen is scanned with an ion beam.

Note that the embodiments and the modification examples described above are merely exemplary, and the present invention is not limited thereto. For example, the embodiments and modification examples can be combined as appropriate.

The present invention is not limited to the above-described embodiments, and various modifications can be made. For example, the present invention includes configurations that are substantially the same as the configurations described in the embodiments. Substantially same configurations mean configurations having the same functions and methods as those of the configurations described in the embodiments, for example. The present invention also includes configurations obtained by replacing non-essential elements of the configurations described in the embodiments with other elements. The present invention further includes configurations obtained by adding known art to the configurations described in the embodiments.

## Claims

1. A charged particle beam apparatus comprising:
an optical system for scanning a specimen with a charged particle beam;
a first detector that detects charged particles generated in the specimen by irradiating the specimen with the charged particle beam;
a second detector that detects a signal unique to an element constituting the specimen, the signal being generated in the specimen by irradiating the specimen with the charged particle beam;
an image acquisition unit that acquires a first image indicating a distribution of intensity of the charged particles and being obtained by scanning the specimen with the charged particle beam through the optical system and detecting the charged particles with the first detector, and acquires a second image indicating a distribution of an element and being obtained by scanning the specimen with the charged particle beam through the optical system and detecting the signal with the second detector;
a correlation calculation unit that divides the first image into a plurality of regions and determines a correlation between each of the regions and the second image; and
an analysis unit that identifies an element for each of the regions, based on the correlation.

2. The charged particle beam apparatus according to claim 1, wherein
the correlation calculation unit divides the first image into a plurality of regions to generate a plurality of partial images, and determines a correlation between each of the generated partial images and the second image; and
the analysis unit identifies an element for each of the partial images, based on the correlation between each of the partial images and the second image.

3. The charged particle beam apparatus according to claim 1 or 2, wherein
the correlation calculation unit divides the first image into a plurality of regions by extraction through image processing.

4. The charged particle beam apparatus according to claim 3, wherein
the correlation calculation unit divides the first image into a plurality of regions by generating a histogram of intensity of the charged particles from the first image and generating an image at each peak of the histogram.

5. The charged particle beam apparatus according to claim 3, wherein
the correlation calculation unit divides the first image into a plurality of regions by image processing that detects shape features from the first image.

6. The charged particle beam apparatus according to any one of claims 1 to 5, wherein
the analysis unit colors the regions of the first image, based on information on an element identified for each of the regions.

7. The charged particle beam apparatus according to any one of claims 1 to 6, wherein
the first image is a backscattered electron image obtained by detecting, with the first detector, backscattered electrons generated in the specimen, and
the second image is an element map obtained by detecting, with the second detector, a characteristic X-ray generated in the specimen.

8. An analysis method in a charged particle beam apparatus that includes:
an optical system for scanning a specimen with a charged particle beam;
a first detector that detects charged particles generated in the specimen by irradiating the specimen with the charged particle beam; and
a second detector that detects a signal unique to an element constituting the specimen, the signal being generated in the specimen by irradiating the specimen with the charged particle beam;
the analysis method comprising:
acquiring a first image indicating a distribution of intensity of the charged particles and being obtained by scanning the specimen with the charged particle beam through the optical system and detecting the charged particles with the first detector, and acquiring a second image indicating a distribution of an element and being obtained by scanning the specimen with the charged particle beam through the optical system and detecting the signal with the second detector;
dividing the first image into a plurality of regions and determining a correlation between each of the regions and the second image; and
identifying an element for each of the regions, based on the correlation.
